# EUROPEAN PATENT SPECIFICATION

(11) **EP 3 363 511 B1**
(45) Date of publication and mention of the grant of the patent: **09.09.2020**
(21) Application number: 16855319.6
(22) Date of filing: 05.10.2016
(51) Int. Cl.: A63F 13/86, A63F 13/27, A63F 13/352, A63F 13/5372, A63F 13/63

(54) **VIDEO GENERATING SYSTEM, CONTROL DEVICE, AND EDITING DEVICE**
VIDEOERZEUGUNGSSYSTEM, STEUERUNGSVORRICHTUNG UND BEARBEITUNGSVORRICHTUNG
SYSTÈME DE GÉNÉRATION DE VIDÉO, DISPOSITIF DE COMMANDE ET DISPOSITIF D'ÉDITION

(30) Priority: 16.10.2015 JP 2015204664
(43) Date of publication of application: 22.08.2018
(73) Proprietor: Kabushiki Kaisha Sega Games doing business as Sega Games Co., Ltd., Tokyo 144-8531 (JP)
(72) Inventor: NOGUCHI, Yosuke, Tokyo 144-8531 (JP); YAMAMOTO, Sohey, Tokyo 144-8531 (JP)
(74) Representative: Osha Liang
(86) International application number: PCT/JP2016/079576
(87) International publication number: WO 2017/065065

(56) References cited:
- WO-A1-2014/078452
- WO-A1-2014/203837
- JP-A- 2002 239 225
- JP-A- 2006 346 000
- JP-A- 2015 008 983
- US-A1- 2009 286 604
- US-A1- 2010 033 303
- US-A1- 2010 262 718
- US-A1- 2012 004 039
- US-A1- 2012 277 040
- US-A1- 2014 094 302
- US-A1- 2014 274 297
- US-A1- 2014 323 213
- NAVARRO PAUL ET AL: "Webz of War: A cooperative exergame driven by the heart", 2013 IEEE INTERNATIONAL GAMES INNOVATION CONFERENCE (IGIC), IEEE, 23 September 2013 (2013-09-23), pages 187-190, XP032524924, ISSN: 2166-6741, DOI: 10.1109/IGIC.2013.6659125 [retrieved on 2013-11-08]
- 'Jikkyo, Yatagarasu', [Online] 27 August 2012, XP055375555 Retrieved from the Internet: <URL:ttps://web.archive.org/web/20120827171 220/http://yatagarasuinfo.web.fc2.com/live. htm> [retrieved on 2015-12-14]

## Description

### TECHNICAL FIELD

The present invention relates to a video generation system.

### BACKGROUND ART

At game centers and other such amusement facilities, event venues, and the like, conventions and other such events may be held for the purpose of promoting new games, allowing game fans to meet each other, and so forth. At such an event, it is common for a game screen on which live game play is happening to be displayed on a large-screen monitor or the like, and for a commentator to provide live commentary about the game.

Although not intended for events, a technology has also been disclosed for automatically generating the audio of live coverage of a game so that the audience (spectators) can also enjoy the game (see, for example, Patent Literature 1 and 2). Patent Literature 3 discloses a system for generating a compilation reel in game video.

### CITATION LIST

### PATENT LITERATURE

Patent Literature 1: JP-A 2002-239225; Patent Literature 2: JP-A H11-253659; Patent Literature 3: US 2014/0274297.

### SUMMARY

### PROBLEM TO BE SOLVED BY THE INVENTION

As mentioned above, in the past it has been common for game video to be displayed directly on a large-screen monitor or the like at an event. A commentator provides useful information along with the progress of the game, which is changing in real time, but there is a limit to such live commentary. As a result, events were sometimes not as exciting as they might have been, and the purpose of the event could not be fully achieved.

The present invention was conceived in light of the conventional problems mentioned above, and it is an object thereof to make it possible to add various kinds of information following the progress of a game as commentary content to the display of the game video, and to improve the quality of live commentary at an event.

### MEANS FOR SOLVING PROBLEM

In order to solve the above mentioned problem, the present invention proposes a video generation system according to appended claim 1. Such a system comprises a game device that outputs game data indicating the state of a game and game video according to the progress of the game, a processing device that receives the game data and processes it into a predetermined format, a generation device that acquires processed or unprocessed game data from the processing device and generates content to be composited with the game video, and a display device that displays video obtained by compositing the content with the game video.

### EFFECTS OF THE INVENTION

With the present invention, various kinds of information following the progress of a game can be added as commentary content to the display of game video, and the quality of live commentary at an event can be improved.

### BRIEF DESCRIPTION OF DRAWINGS

FIG. 1 is a diagram showing a configuration example of a video generation system pertaining to an embodiment of the present invention.
FIG. 2 is a diagram showing an example of the functional configuration of a game machine, a live commentary controller, a video system workstation, and a portable terminal.
FIG. 3 is a sequence diagram showing a processing example of an embodiment.
FIG. 4 is a diagram showing an example of game video.
FIG. 5 is a diagram showing an example of a content production screen.
FIG. 6 is a diagram showing a screen example of a live commentary controller.
FIG. 7 is a diagram showing an example of commentary display content.
FIG. 8 is a diagram showing a screen example in which game video is composited with commentary display content.
FIG. 9 is a diagram showing an example of content data and game data.
FIG. 10 is a diagram showing an example of commentary display content.
FIG. 11 is a diagram showing a screen example in which game video is composited with commentary display content
FIG. 12 is a diagram showing an example of an operation screen for transmitting card information from a live commentary controller to a video system workstation.
FIG. 13 is a diagram showing a screen example in which game video is composited with commentary display content.
FIG. 14 is a diagram showing an example of content data and game data.
FIG. 15 is a diagram showing an example of commentary display content.
FIG. 16 is a diagram showing a screen example in which game video is composited with commentary display content.

### DETAILED DESCRIPTION OF THE INVENTION

A preferred embodiment of the present invention will be described below.

### Configuration

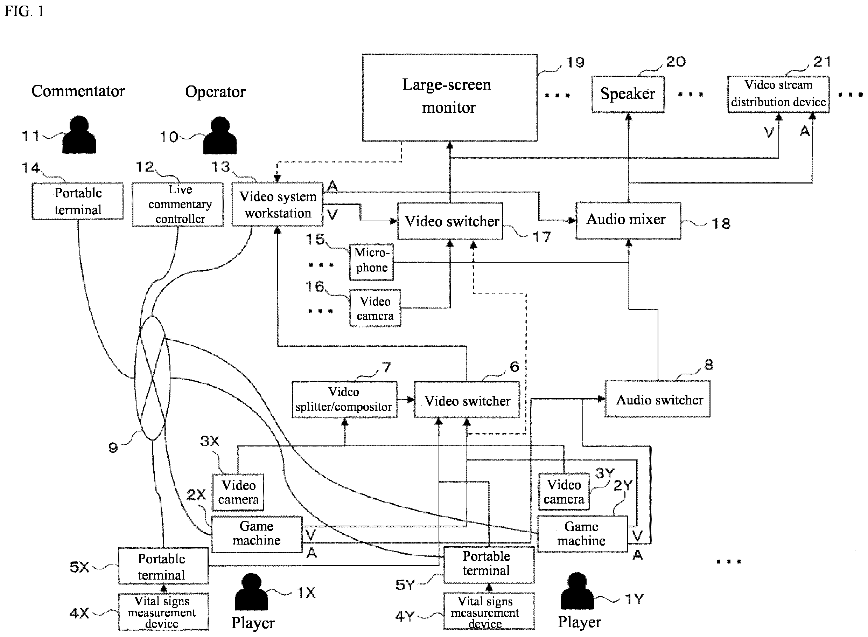

FIG. 1 is a diagram showing a configuration example of a video generation system pertaining to an embodiment of the present invention, which is set up in a game center or another such amusement facility or the like.

In FIG. 1, one or more game machines 2 (2X, 2Y, ...) operated by one or more players 1 (1X, 1Y, ...) are provided. The game machines 2 include arcade game machines, home game machines, personal computers (running a game application), and various other kinds of game machines, as well as terminals (a commercial game machine equipped with a live video display and replay playback and recording functions for the game), and the like.

Also, one or more video cameras 3 (3X, 3Y, ...) are provided for filming what players 1 are doing as they play the game. Furthermore, one or more vital signs measurement devices 4 (4X, 4Y, ...) are provided for measuring the vital signs (various types of biological information such as heart rate and pulse) of each player 1. Instead of the vital signs measurement devices 4, another device that handles different data may be used. Also, one or more portable terminals 5 (5X, 5Y, ...) are provided, such as tablets, smart phones, PCs (personal computers), digitized pads, or the like that collect vital signs data from the vital signs measurement devices 4 and perform data processing such as graphing by means of an application compatible with the vital signs data measurement device.

The video output port (V: video) of the game machine 2 is connected to the input port of a video switcher 6, and the audio output port (A: audio) of the game machine 2 is connected to the input port of an audio switcher 8. The output port of the video camera 3 is connected to the input port of a video splitter/compositor 7, and the output port of the video splitter/compositor 7 is connected to the input port of the video switcher 6. The video output port (from which video of a graph of vital signs data, etc., is outputted) of the portable terminal 5 is connected to the input port of the video switcher 6. The video switcher 6 outputs the video signal selected from the video signals inputted to a plurality of input ports. The video splitter/compositor 7 splits a video signal inputted to a plurality of input ports into, for example, a plurality of tile-shaped areas, composites the split signals, and outputs the composited video signal. The audio switcher 8 is for outputting an audio signal selected from audio signals inputted to a plurality of input ports.

The data communication port of the game machine 2 and the data communication port of the portable terminal 5 are connected to a network 9 such as a LAN (local area network). This connection may be by wire or wireless. When the measured vital signs data and the like are outputted from the portable terminal 5 and video or the like of the graphed vital signs data is not outputted from the portable terminal 5, graphing and other such data processing can be performed at a video system workstation 13 (discussed below; to which vital signs data and the like are inputted via a live commentary controller 12). Using vital signs data as commentary content allows a live video reflecting the biological state of a player to be generated.

Meanwhile, the live commentary controller 12 and the video system workstation 13, which are computer devices operated by an operator 10 (can also be used by a commentator 11) are provided, and the data communication ports of the live commentary controller 12 and the video system workstation 13 are connected to the network 9. The video system workstation 13 comprises a production monitor used for content production work and an on-air monitor for checking the final output video from the video system workstation 13. Also, a portable terminal 14 such as a tablet, a smartphone, a PC, a digitized pad, or the like that is operated by the commentator 11 is provided, and the data communication port of the portable terminal 14 is connected to the network 9.

Also, one or more microphones 15 for picking up the voice of the commentator 11 or the like and one or more video cameras 16 for filming venue scenes or the like are provided. The video output port of the video system workstation 13 and the output port of the video camera 16 are connected to the input port of the video switcher 17. The video switcher 17 has the function of outputting the video signal selected from among the video signals inputted to a plurality of input ports, as well as the function of compositing video. As will be discussed below, as a general rule, the video system workstation 13 is intended to composite the game video and the content image of the game machines 2. Performing the compositing within the video system workstation 13 eliminates the need for a dedicated device for compositing. However, compositing can be performed at the video switcher 17, rather than at the video system workstation 13. This reduces the processing load on the video system workstation 13. In this case, the video output port of the game machine 2 is connected to the input port of the video switcher 17 as indicated by the broken line.

The output port ofthe audio switcher 8, the audio output port ofthe video system workstation 13, and the output port of the microphone 15 are connected to the input port of an audio mixer 18. The audio mixer 18 mixes audio signals inputted to a plurality of input ports.

Also, one or more large-screen monitors 19 such as a liquid crystal panel are provided, and a video signal is supplied from the output port of the video switcher 17. The large-screen monitor 19 is constituted by a large-screen liquid crystal panel or a projector. The large-screen monitor 19 may have a touch panel, in which case the operation signal of the touch panel is connected to the input port ofthe video system workstation 13 as indicated by the broken line. In this case, the commentator 11 can manipulate the video from the touch panel of the large-screen monitor 19 in place of or in combination with the portable terminal 14.

Also, one or more speakers 20 are provided, and an audio signal is supplied from the output port ofthe audio mixer 18. Furthermore, a video stream distribution device 21 for distributing a video stream over the Internet or the like is provided, and video signals and audio signals are supplied as sources from the output ports of the video switcher 17 and the audio mixer 18.

Although not depicted in the drawings, the video switcher 6, the audio switcher 8, the video switcher 17, and the audio mixer 18 can be disposed at positions where they can be directly operated by the operator 10, or can be operated remotely by the operator 10.

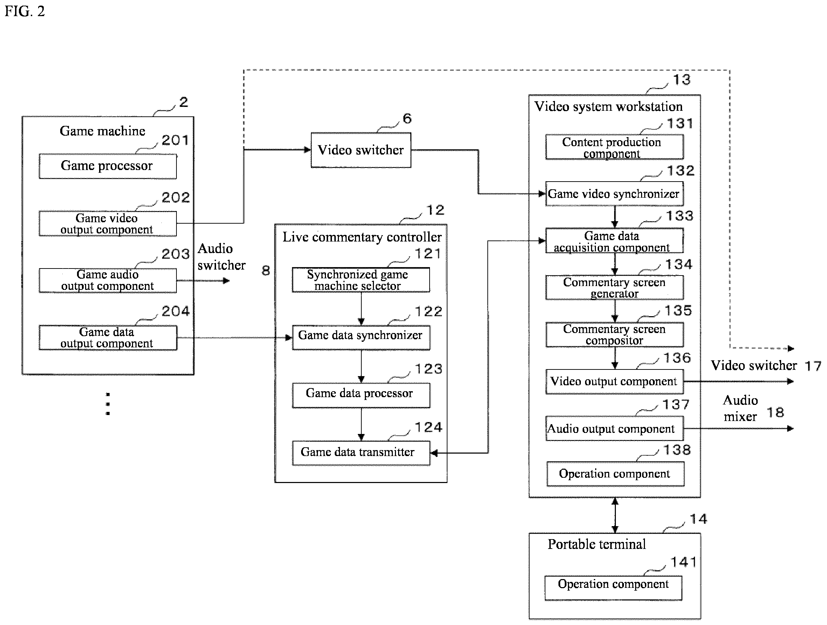

FIG. 2 is a diagram showing an example ofthe functional configuration ofthe game machine 2, the live commentary controller 12, the video system workstation 13, and the portable terminal 14.

In FIG. 2, the game machine 2 comprises a game processor 201, a game video output component 202, a game audio output component 203, and a game data output component 204. The function of the game processor 201 is to advance the game in accordance with operations by the player 1. The function of the game video output component 202 is to output game video. The function ofthe game audio output component 203 is to output game audio. The function ofthe game data output component 204 is to output various kinds of game data indicating the state of the game. When the game program of the game in question has the function of outputting specific game data necessary for live commentary at an event, that function may be used as is. If there is no function of outputting specific game data, a function of selectively extracting and outputting specific game data is added to the game program. Examples of game data include information about operation input by the player 1, various in-game scores, position coordinates and states of objects and characters in the game, the progress and results of the game, player names, game play results, and various types of information in an ID card that stores saved data (various saved data information for an individual player linked to a player ID), and so on.

The live commentary controller 12 comprises a synchronized game machine selector 121, a game data synchronizer 122, a game data processor 123, and a game data transmitter 124. The function of the synchronized game machine selector 121 is to accept the selection by the operator 10 of the game machine 2 to be synchronized, and set this machine as the target of synchronization. Here, synchronization refers to using the live commentary controller 12 to continuously acquire game data in real time from the game machine 2 outputting game video that is the subject of live commentary.

The function of the game data synchronizer 122 is to continuously acquire the game data outputted from the game data output component 204 of the game machine 2. The function of the game data processor 123 is to process game data acquired by the game data synchronizer 122 into a data format that can be handled by the video system workstation 13 at a later stage. For example, in the case of a digital trading card game, the in-game data ID of a card is processed (converted) into text describing the card effect, card name text, or card illustration image file path information in the live commentary controller 12. Also, in the case of a racing game, the in-game data ID of a race car is converted into image file path information or the model name text in the live commentary controller 12. Game data in a data format not requiring any processing (such as coordinate data) need not be processed.

The function of the game data transmitter 124 is to transmit game data processed or unprocessed by the game data processor 123 to the video system workstation 13. The transmission of game data from the game data transmitter 124 may be performed automatically based on the acquisition of game data from the game machine 2 (synchronous transmission), or it may be performed upon receipt of an individual request from the video system workstation 13 (individual transmission). Individual transmission is performed, for example, when it is necessary for the commentator 11 to operate a user interface such as a button provided at the video system workstation 13 to acquire game data not included in synchronous transmission. A configuration such as this increases the variety of commentary content.

The video system workstation 13 comprises a content production component 131, a game video synchronizer 132, a game data acquisition component 133, a commentary screen generator 134, a commentary screen compositor 135, a video output component 136, an audio output component 137, and an operation component 138. The function of the content production component 131 is to produce in advance the commentary content to be composited with (superimposed on) a game video using various authoring applications. Commentary content is comprised by various buttons, menus, and the like. Also, 3D data, 2D data, text data, video clips, and the like may be used as commentary content.

The function of the game video synchronizer 132 is to input game video (input using the function of a video input/output board) from the game machine 2 to be synchronized via the video switcher 6. If the compositing of game video and display content is not performed at the video system workstation 13 as described above, the game video synchronizer 132 can be omitted. The function of the game data acquisition component 133 is to acquire game data from the game data transmitter 124 of the live commentary controller 12. As described above, the acquisition of game data may be performed by synchronous transmission or by individual transmission. The function of the commentary screen generator 134 is to generate a commentary screen including commentary content based on the game data acquired by the game data acquisition component 133.

The function of the commentary screen compositor 135 is to composite (superimpose) the commentary screen generated by the game data acquisition component 133 with the game image inputted by the game video synchronizer 132. If the compositing of game video and display content is not performed at the video system workstation 13 as described above, the commentary screen compositor 135 can be omitted. The function of the video output component 136 is to transmit to the video switcher 17 the video signal composited by the commentary screen compositor 135, or, if compositing is not performed, the video of the commentary screen generated by the commentary screen generator 134. The function of the audio output component 137 is to output an audio signal, such as sound effects, in conjunction with the operation of a commentary content, to the audio mixer 18. The function of the operation component 138 is to provide a user interface for the operator 10 to operate the functions of the video system workstation 13, and control the components in the video system workstation 13 according to this operation.

The portable terminal 14 provides the commentator 11 with a screen that is the same as the video composited by the video system workstation 13 and shows a state in which the commentary content can be operated, and has an operation component 141 that notifies of operation input to the video system workstation 13 in response to the operation of commentary content by the commentator 11. If the portable terminal 14 has a touch panel function, the operation is performed by tapping with a finger, a stylus pen, or the like. Also, saying that the commentary content can be operated means, for example, that the content of a button can be tapped, and processing corresponding to the button is activated by a tap of the button. The screen displayed on the portable terminal 14 is also displayed on the operation component 138 of the video system workstation 13, and the commentary content can also be operated from the operation component 138 in the same way as from the portable terminal 14.

The game machine 2, the live commentary controller 12, the video system workstation 13, and the portable terminal 14 comprise a CPU (central processor), a ROM (read-only memory), a RAM (random-access memory), a NVRAM (non-volatile random-access memory), an HDD (hard disk drive), an SSD (solid-state drive)/flash memory, and the like, which are the main components of a typical computer device. The above functions are realized by executing a specific program in the CPU. The program may be acquired via a recording medium, may be acquired via a network, or may be incorporated into a ROM.

### Operation

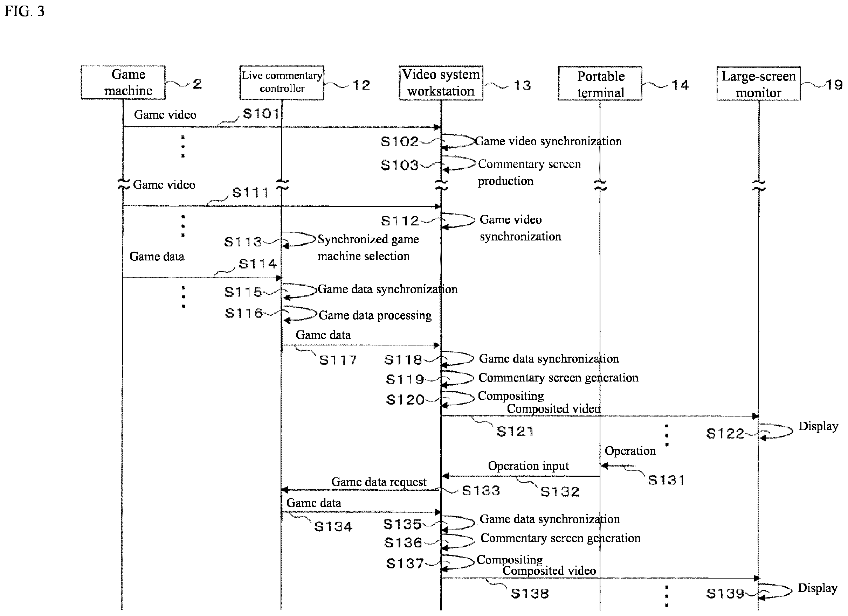

FIG. 3 is a sequence diagram showing a processing example of the above embodiment. In FIG. 3, the video system workstation 13 inputs game video from the game machine 2 (step S101), synchronizes and incorporates the game video (step S102), and produces a commentary screen that includes effective commentary content while referring to the game video (step S103). The commentary content includes content explanations based on text, content based on 3D or 2D displays, and content based on video clips. More specifically, the software in the video system workstation 13 is used to produce various kinds of display content to be used for live commentary of an event (buttons used by the commentator for operation, various graphs of game data, various interfaces and displays for displaying game data, various interfaces and displays for deciding on the display position in synchronization with game data coordinates, various interfaces and displays, buttons, and so forth in which the region is set to match coordinate positions with game screens), including designs, animation behavior, synchronization settings with various programs, and so on.

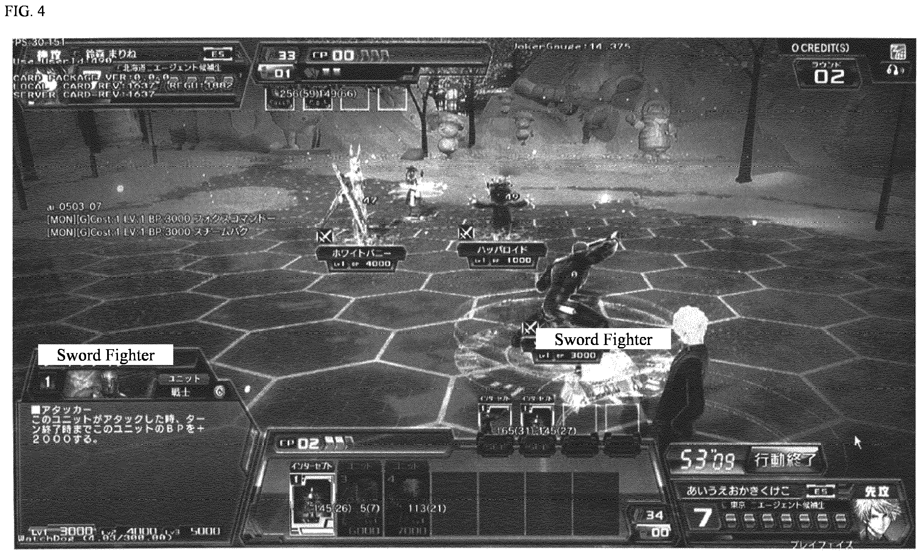

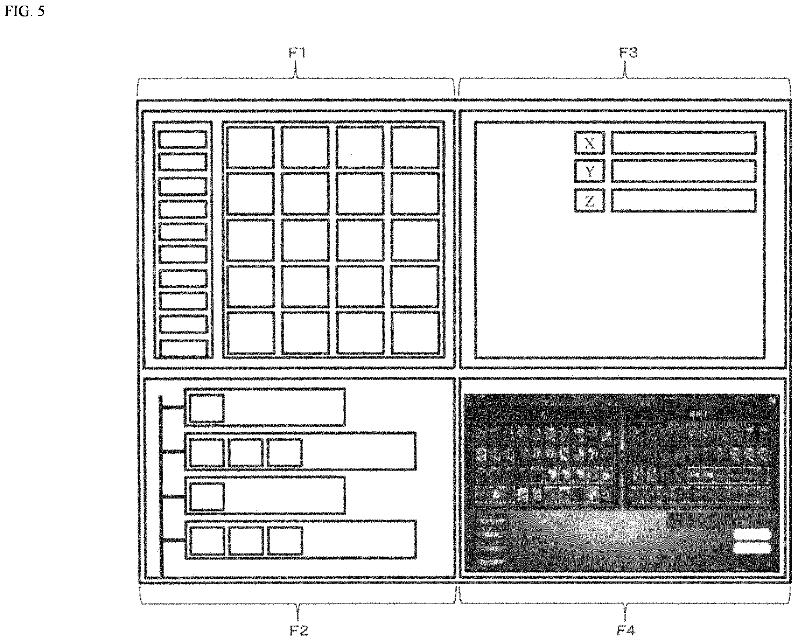

FIG. 4 shows an example of game video in the case of a digital trading card game. FIG. 5 shows an example of a content production screen in the video system workstation 13. In the illustrated example, a frame F1 for displaying a list of materials (plug-ins, media, etc.) for content production, a frame F2 for displaying a combination of selected materials, a frame F3 for setting the display, and a frame F4 for displaying the state in which the commentary content is disposed on the game video.

Returning to FIG. 3, when an event is held at an amusement facility or the like, the video system workstation 13 inputs game video from the game machine 2 (step S111), and synchronizes and incorporates the game video (step S112).

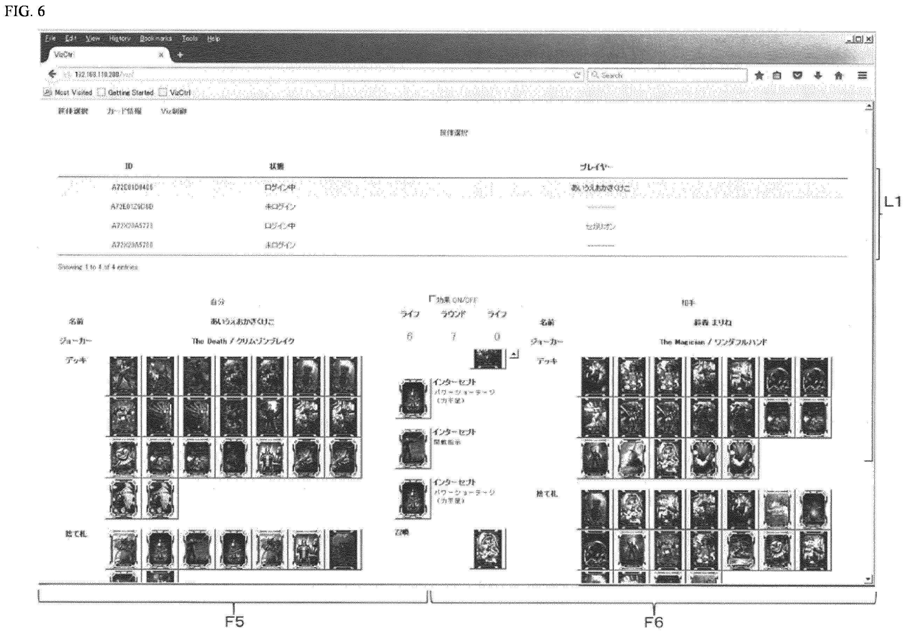

Also, the live commentary controller 12 accepts the selection of the game machine to be synchronized from the operator 10 and sets the game machine to be synchronized (step S113). FIG. 6 shows an example of a user interface screen for selecting the game machine to be synchronized at the live commentary controller 12, and by selecting a game machine (specifying a game machine by a logged-in user) from a list L1, a frame F5 for showing information about the user of the selected game machine, a frame F6 for showing information about an opponent, and the like are displayed.

Returning to FIG. 3, when game data is transmitted from the game machine 2 set to be synchronized (step S114), the live commentary controller 12 acquires and synchronizes this game data (step S115).

Next, the live commentary controller 12 processes the game data as needed (step S116). As described above, in the case of a digital trading card game, in-game data ID of a card is converted into text describing the card illustration image file path information in the live commentary controller 12, card name text, and the card effect. The coordinates of characters and objects do not particularly need to be processed.

Next, the live commentary controller 12 transmits the processed or unprocessed game data to the video system workstation 13 (step S117), and the video system workstation 13 acquires and synchronizes this game data (step S118).

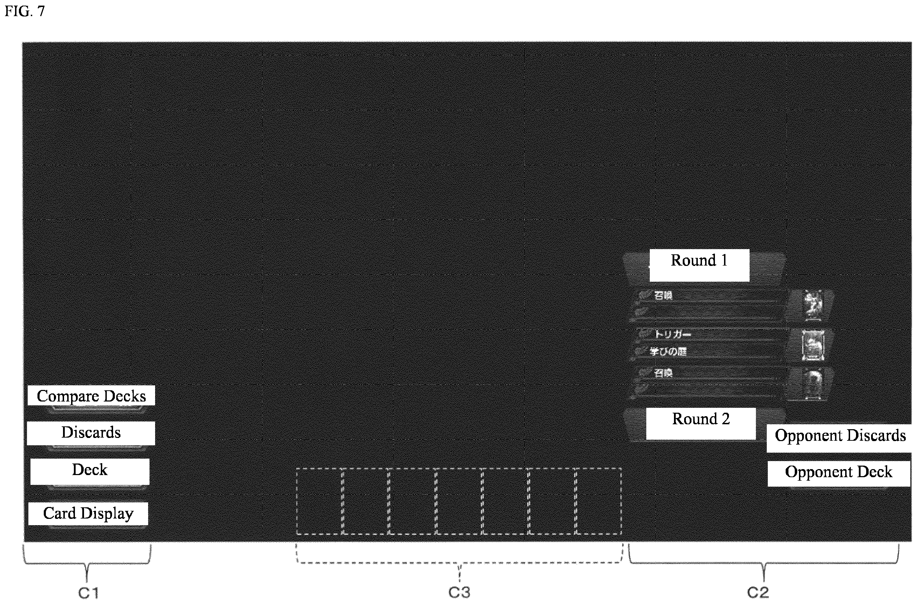

Next, the video system workstation 13 generates a commentary screen that reflects the game data in the commentary content produced in advance (step S119). For example, the acquired game data is displayed in a specific location as various kinds of display content, images and video are displayed linked to image files and video files along with file path information for the game data, or the positions of various kinds of display content are synchronized and displayed along with position coordinates. Also, videos from the video cameras 3 and 16 are sometimes composited with display content. FIG. 7 shows an example of a commentary screen, in which commentary content C1 composed of a plurality of buttons is displayed at the lower left ofthe screen, and commentary content C2 showing the history is displayed from the center downward on the right side of the screen. Also, commentary content consisting of transparent buttons can be disposed on the screen. For example, commentary content C3 consisting of transparent buttons for accepting the selection of seven cards that are displayed can be disposed at the bottom center of the screen in FIG. 4.

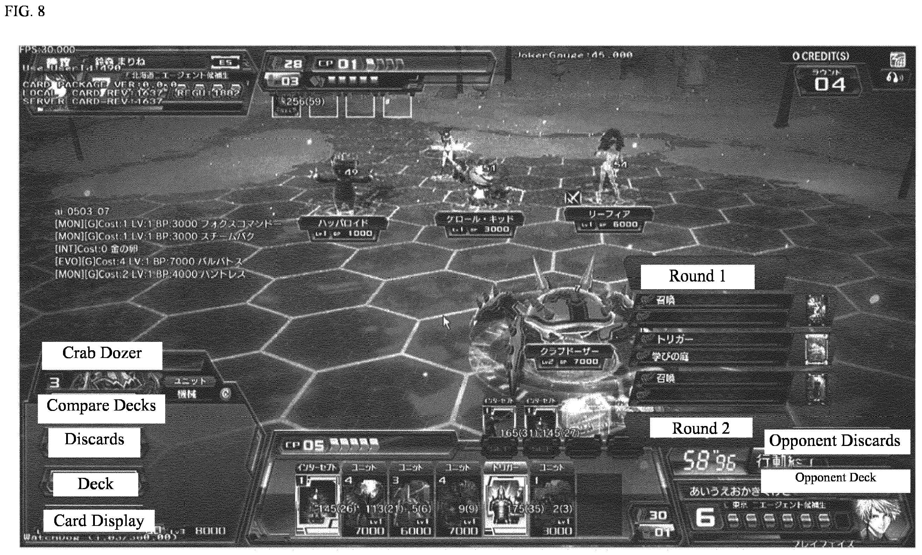

Returning to FIG. 3, the video system workstation 13 composites the game video being continuously inputted from the game machine 2 with the generated commentary screen (step S120), and outputs the composited screen video on the large-screen monitor 19 (step S121), and the large-screen monitor 19 displays this video (step S122). FIG. 8 shows an example of the displayed video, which is the result of compositing the commentary screen (FIG. 7) including the commentary content with the game video.

As mentioned above, compositing can be performed by the video switcher 17, rather than by the video system workstation 13. Although not depicted, an audio signal (game audio, the commentator's voice, sound effects for commentary content, etc.) is provided to the speaker 20 at the same time, and audio is outputted.

Returning to FIG. 3, when the commentator 11 performs an operation on the commentary content at the portable terminal 14 (such as tapping a button, or using a dedicated controller or a dedicated remote control to make an input) (step S131), the portable terminal 14 notifies the video system workstation 13 of operation input (step S132). Upon receiving this, if the video system workstation 13 determines that the game data held at the present time cannot be accommodated in the processing activated for that operation, a request for game data is made to the live commentary controller 12 (step S133).

Upon receiving this, the live commentary controller 12 transmits processed or unprocessed game data to the video system workstation 13 (step S134), and the video system workstation 13 acquires and synchronizes the game data (step S135). Then, the video system workstation 13 generates a commentary screen that reflects the game data in the commentary content produced in advance (step S136), and composites the game video with the commentary screen (step S137). The video system workstation 13 outputs video of the composited screen to the large-screen monitor 19 (step S138), and the large-screen monitor 19 displays the video (step S139).

### Specific Example #1

An example will be described of displaying card information about a card selected by an operation (tapping, etc.) of a transparent button embedded in an area where game video cards are disposed.

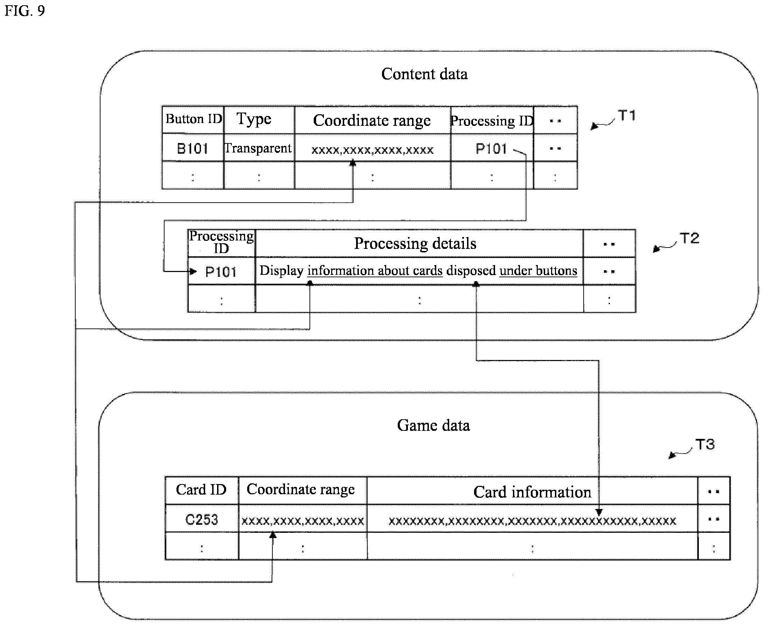

FIG. 9 is a diagram showing an example of content data and game data. Examples of what is held as content data include a table T1 that associates button ID, type (normal, transparent, etc.), coordinate range (the range on the screen over which the operation of a button is valid), processing ID, and so forth, and a table T2 that associates processing ID, processing content, and so forth. The buttons corresponding to the button ID of table T1 are provided corresponding to each of the seven cards displayed at the bottom center of the screen in FIG. 8, for example. The coordinate range is set to correspond to the outline of each card. The processing of the table T2 specified by the processing ID is to display information about the cards disposed below the buttons. Which cards are disposed below the buttons varies as the game proceeds, and sometimes there are no such cards. Meanwhile, game data is held in a table T3 that associates card ID, coordinate range, card information, and so forth. The coordinate range shows the position on the screen when the card specified by the card ID is disposed on the screen.

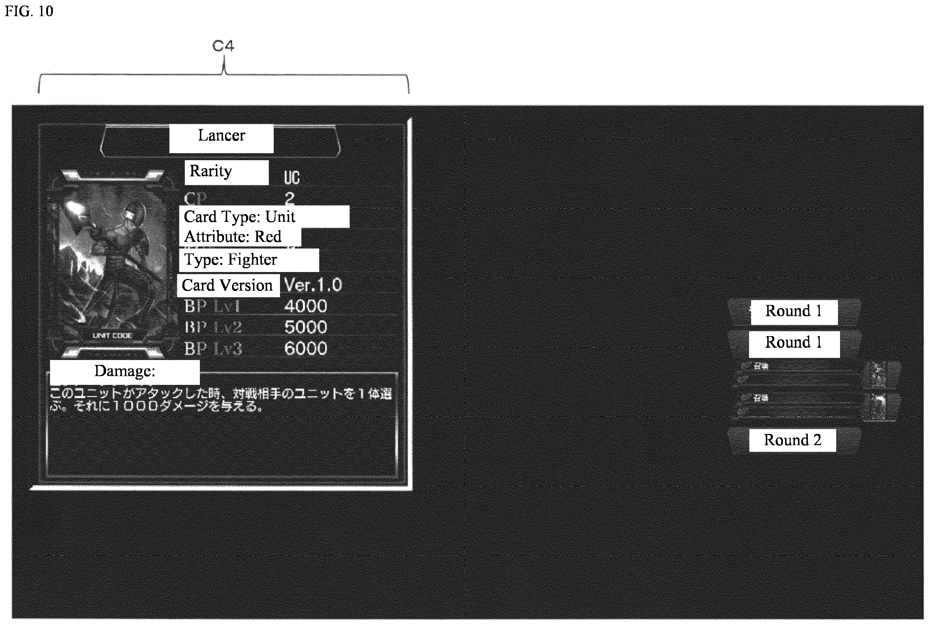

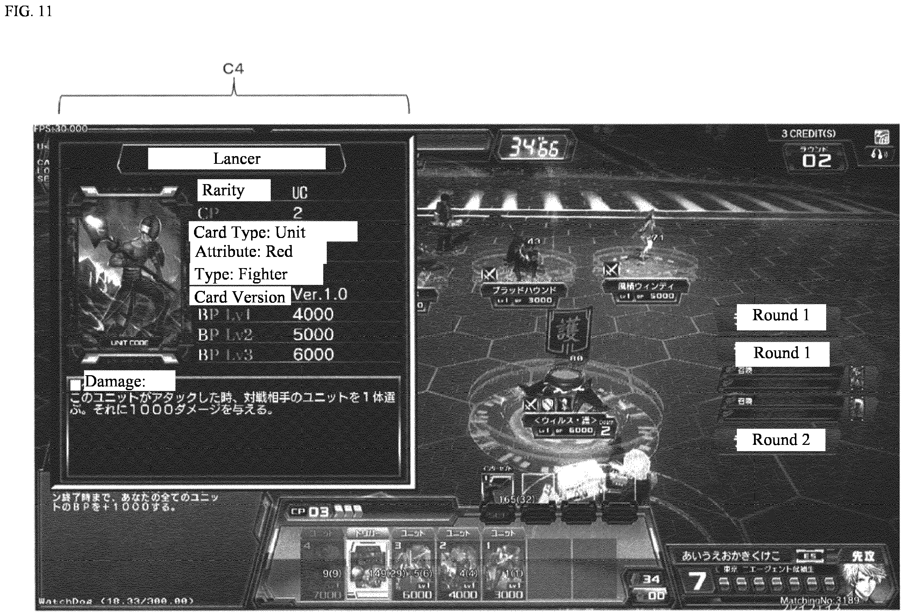

In this state, if the commentator 11 taps on the screen, for example, and the tapped position is in the coordinate range of the button ID "B101" in Table T1, the processing of the associated processing ID "P101" is activated. When the processing in Table T2 is executed, a card ID of "C253" is specified at which the coordinate range ofthe button ID "B101 " in Table T1 matches the coordinate range of Table T3, and this card information is acquired and displayed on the screen as additional commentary content. FIG. 10 shows an example of commentary screen displaying commentary content C4 for card information, and FIG. 11 shows the state after being composited with the game video.

The commentator 11 is able to provide live commentary while appropriately displaying detailed information about the cards held by the player 1, and can provide a convincing, meaningful explanation.

### Specific Example #2

An example will be described in which the operator 10 or the commentator 11 selects a card that is not being used by the player 1 from the live commentary controller 12, transmits the card information to the video system workstation 13, and displays the card information from a "card display" button.

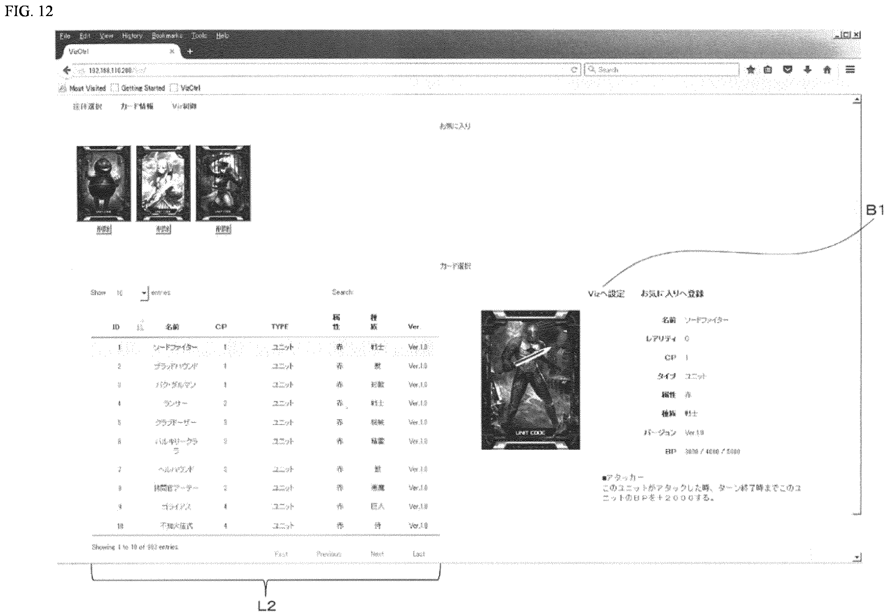

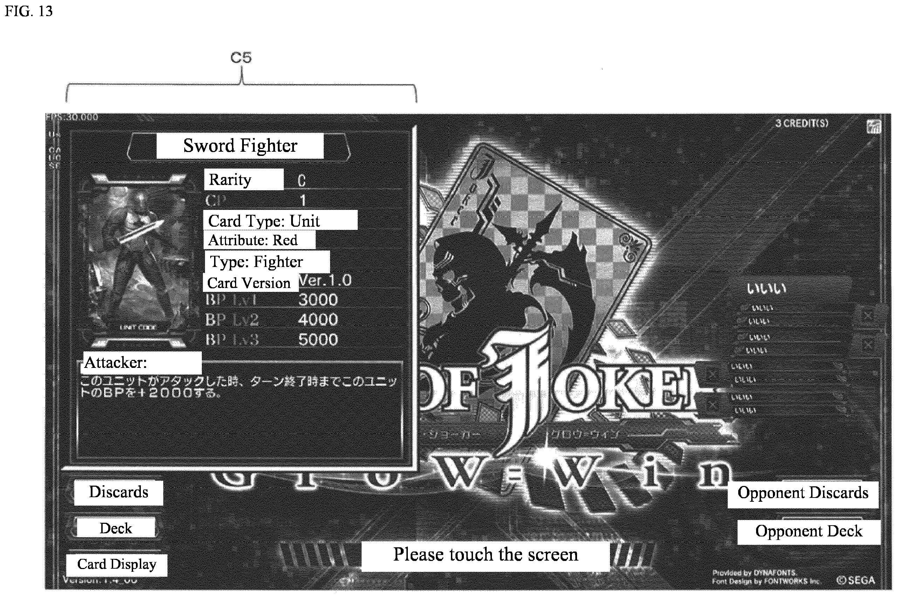

FIG. 12 shows an example of the operation screen of the live commentary controller 12. When the card with an ID of "1" is selected from a list L2 and the button B1 is pressed, card information about the selected card is transmitted to the video system workstation 13. After this, when the commentator 11 taps the "card display" button (for example, the button titled "card display" at the lower left of the screen in FIG. 8), card information is displayed on the screen as additional commentary content via selection from among a plurality of display candidate cards. FIG. 13 shows the state after the commentary content C5 ofthe card information has been composited with the game video. The cards being used by the player 1 are also included in the plurality of display candidate cards, and card information about the cards being used by the player 1 can also be displayed.

The commentator 11 is able to provide live commentary while appropriately displaying detailed information about the cards which the player 1 is not using, and can provide a convincing, meaningful explanation.

### Specific Example #3

An example will be described in which held cards (decks) of the player and an opponent player of the game machines to be synchronized are displayed in comparison.

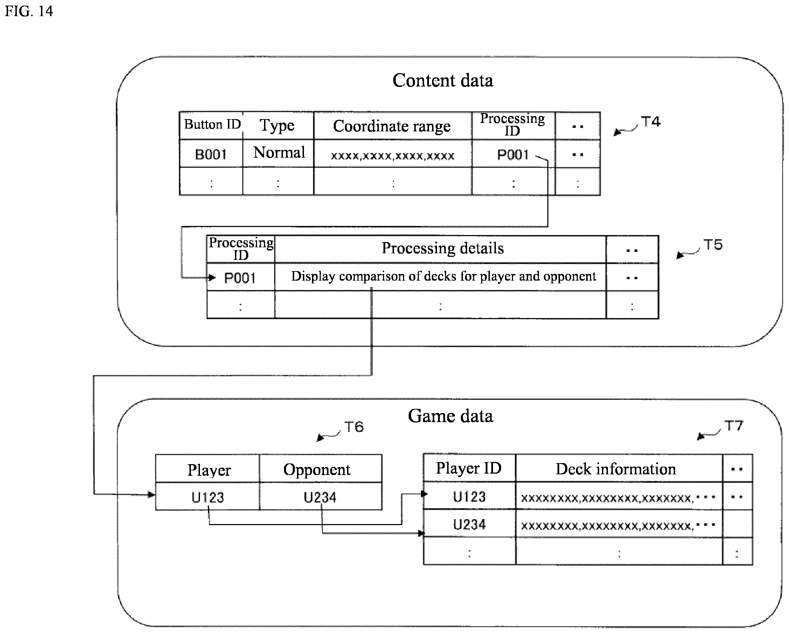

FIG. 14 is a diagram showing an example of content data and game data. Examples of what is held as content data include a table T4 that associates button ID, type (normal, transparent, etc.), coordinate range (the range on the screen over which the operation of a button is valid), processing ID, and so forth, and a table T5 that associates processing ID, processing content, and so forth. The processing specified by the processing ID for displaying a comparison of the decks of the player and the opponent. Meanwhile, as game data, the player IDs of the player and the opponent are held in a table T6. A table T7 that associates player ID and deck information is also held.

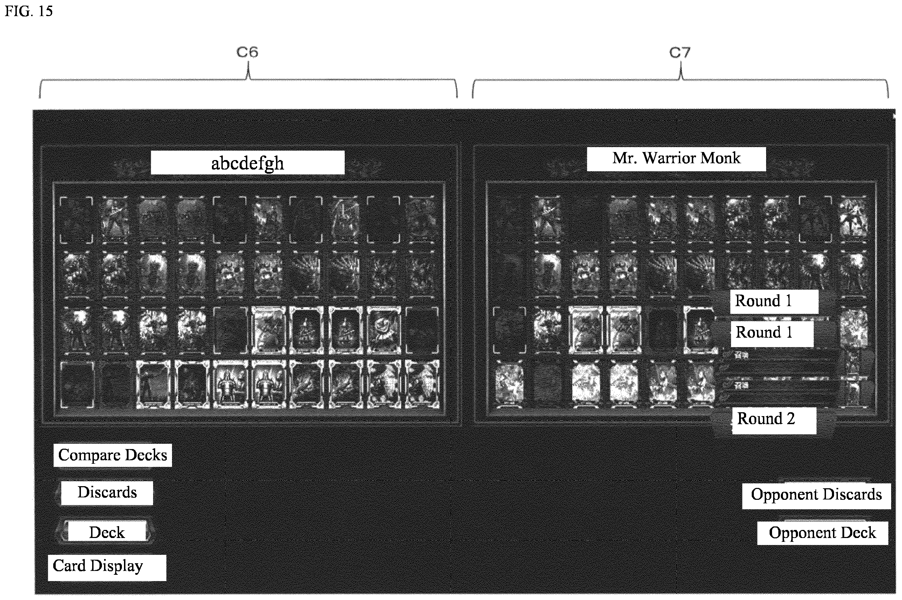

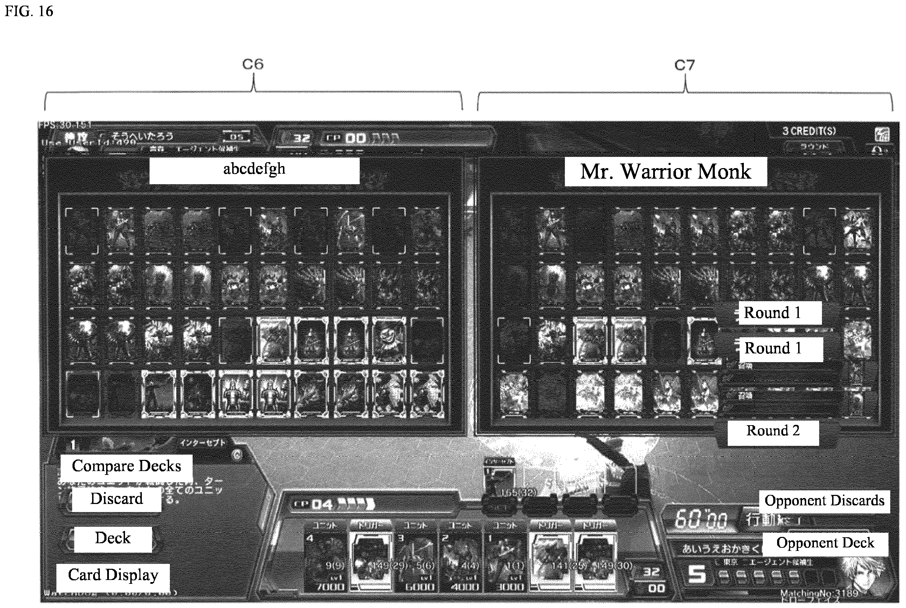

In this state, if the commentator 11 taps the screen, for example, and the tapped position is in the coordinate range ofthe button ID "B001" in Table 4, the processing ofthe associated processing ID "P001" is activated. By executing the processing in Table T5, the player IDs of the player and the opponent from Table T6 are specified, deck information for each player ID is acquired from Table T7, and this is displayed on the screen as additional commentary content. FIG. 15 shows an example of commentary screen in which is displayed commentary content C6 and C7 for deck information, and FIG. 16 shows the state after being composited with the game video.

The commentator 11 is able to provide live commentary while displaying a comparison of the deck information for both players during a match, and can provide a convincing, meaningful description.

### Summary

As described above, with this embodiment, various types of information following the progress of the game can be added as commentary content to the display of game video, and the quality of live commentary at an event can be improved.

The present invention was described above by giving a preferred embodiment of the present invention. Here, the present invention was described by giving specific examples, but it is obvious that various modifications and changes can be added to these specific examples without departing from the scope of the invention defined by the appended claims. That is, the details of embodiments and the accompanying drawings should not be construed as limiting the present invention.

For example, the configuration in FIG. 1 need not all be in the same facility (game center, event venue, etc.). More specifically, at least one or more of the live commentary controller 12, the video system work station 13, the portable terminal 14, the video stream distribution device 21, and other devices that perform game event commentary control may be installed in a different facility. With this configuration, when the same service is provided at multiple facilities, this reduces the work involved in setting up the devices other than the game machines 2 in each facility, and shared devices can be set up together in a single location in each facility, which simplifies maintenance, reduces costs, etc., and also makes it possible to increase operating variations of the game tournament events. Also, in order to generate commentary images that are composited with game video, game video may be transmitted from the game machines 2 installed in each facility to a device that performs game event commentary control via the network 9, but game data received from the game machines 2 may be used and reproduction devices for reproducing the game video (such as the same game machines as on the facility side) may be separately provided, or the function of reproducing game video may be given to the video system work station 13 itself to generate game video. This eliminates the need to transmit game video from the game machines 2 to the video system work station 13, and reduces the amount of data to be transmitted. The commentary images thus generated are distributed from the video stream distribution device 21 to each facility, but instead of providing a reproduction device for reproducing game video, the commentary image data from before compositing with the game video may be distributed to each facility from the video stream distribution device 21, a device for compositing the received commentary screen and the game video may be provided within the facility, and the game video outputted from the game machines 2 may be composited and displayed on the large-screen monitor 19.

### REFERENCE SIGNS LIST

- 1, 1X, 1Y: player
- 2, 2X, 2Y: game machine (game device)
- 201: game processor
- 202: game video output component
- 203: game audio output component
- 204: game data output component
- 3, 3X, 3Y: video camera
- 4, 4X, 4Y: vital signs measurement device
- 5, 5X, 5Y: portable terminal
- 6: video switcher
- 7: video splitter/compositor
- 8: audio switcher
- 9: network
- 10: operator
- 11: commentator
- 12: live commentary controller (processing device, control device)
- 121: synchronized game machine selector
- 122: game data synchronizer
- 123: game data processor
- 124: game data transmitter
- 13: video system workstation (generation device, compositing device, control device)
- 131: content production component
- 132: game video synchronizer
- 133: game data acquisition component
- 134: commentary screen generator
- 135: commentary screen compositor
- 136: video output component
- 137: audio output component
- 138: operation component
- 14: portable terminal (operation device)
- 141: operation component
- 15: microphone
- 16: video camera
- 17: video switcher (compositing device)
- 18: audio mixer
- 19: large-screen monitor (display device)
- 20: speaker
- 21: video stream distribution device

## Claims

1. A video generation system, comprising:
a processing device (12);
a generation device (13), wherein the processing device (12) and generation device (13) are computer devices configured to be operated by an operator or a commentator;
a game device (2) configured to output, to the generation device (13), game video that is subject of live commentary and, to the processing device (12), game data that comprises a position coordinate of an object in a game and information in accordance with the state and progress of the game; and
a display device (19), wherein
the processing device (12) is configured to:
continuously receive the game data in real time from the game device (2); and
process the game data into a predetermined format, and wherein
the generation device (13) is configured to:
acquire the processed game data from the processing device (12); and
generate commentary content to be composited with the game video using the processed game data in response to operation input by the commentator, and
composite the commentary content with the game video continuously inputted from the game device (2) at a position synchronized with the position coordinate, the composited video outputted by the generation device (13) being displayed by the display device (19).

2. The video generation system according to claim 1, further comprising an operating device configured to operate the generation device (13).

3. The video generation system according to any of claims 1 or 2, wherein the processing device (12) is configured to provide game data to the generation device (13) in response to receiving a request from the generation device (13).

4. The video generation system according to any of claims 1 to 3, further comprising a device configured to acquire biological information about a game player who plays the game, wherein the generation device (13) is configured to generate commentary content from the acquired biological information.

## Patentansprüche

1. Videoerzeugungssystem, das umfasst:
eine Verarbeitungseinheit (12);
eine Erzeugungseinheit (13);
wobei die Verarbeitungseinheit (12) und die Erzeugungseinheit (13) Computervorrichtungen sind, die derart ausgebildet sind, dass sie von einem Bediener oder einem Kommentator bedient werden;
eine Spielvorrichtung (2), die derart ausgebildet ist, dass sie an die Erzeugungsvorrichtung (13) ein Spielvideo ausgibt, das Gegenstand eines Live-Kommentars ist, und an die Verarbeitungsvorrichtung (12) Spieldaten ausgibt, die eine Positionskoordinate eines Objekts in dem Spiel und Informationen über den Stand und den Fortschritt des Spiels umfassen; und
eine Anzeigevorrichtung (19), wobei
die Verarbeitungsvorrichtung (12) ausgebildet ist zum:
kontinuierlichen Empfangen der Spieldaten in Echtzeit aus der Spielvorrichtung (2); und
Verarbeiten der Spieldaten in ein vorbestimmtes Format, und wobei die Erzeugungsvorrichtung (13) ausgebildet ist zum:
Erfassen der verarbeiteten Spieldaten aus der Verarbeitungsvorrichtung (12); und
Erzeugen eines Kommentarinhalts, der in Reaktion auf die Betriebseingabe durch den Kommentator unter Verwendung der verarbeiteten Spieldaten mit dem Spielvideo zusammengesetzt wird, und
Zusammensetzen des Kommentarinhalts mit dem kontinuierlich von der Spielvorrichtung (2) eingegebenen Spielvideo an einer Position, die mit der Positionskoordinate synchronisiert ist, wobei das von der Erzeugungsvorrichtung (13) ausgegebene zusammengesetzte Video von der Anzeigevorrichtung (19) angezeigt wird.

2. Videoerzeugungssystem nach Anspruch 1, das ferner eine Bedienungsvorrichtung umfasst, die derart ausgebildet ist, dass sie die Erzeugungsvorrichtung (13) bedient.

3. Videoerzeugungssystem nach einem der Ansprüche 1 oder 2, bei dem die Verarbeitungsvorrichtung (12) derart ausgebildet ist, dass sie in Reaktion auf das Empfangen einer Anfrage aus der Erzeugungsvorrichtung (13) Spieldaten zu der Erzeugungsvorrichtung (13) liefert.

4. Videoerzeugungssystem nach einem der Ansprüche 1 bis 3, die ferner eine Vorrichtung umfasst, die derart ausgebildet ist, dass sie biologische Informationen über einen Spieler erfasst, der das Spiel spielt, wobei die Erzeugungsvorrichtung (13) derart ausgebildet ist, dass sie einen Kommentarinhalt aus den erfassten biologischen Informationen erzeugt.

## Revendications

1. Système de génération vidéo, comprenant :
un dispositif de traitement (12) ;
un dispositif de génération (13),
dans lequel le dispositif de traitement (12) et le dispositif de génération (13) sont des dispositifs informatiques configurés pour être gérés par un opérateur ou un commentateur ;
un dispositif de jeu (2) configuré pour fournir, au dispositif de génération (13), une vidéo de jeu faisant l'objet d'un commentaire en direct et, au dispositif de traitement (12), des données de jeu comprenant une coordonnée de position d'un objet dans un jeu et des informations en fonction de l'état et du déroulement du jeu ; et
un dispositif d'affichage (19), dans lequel le dispositif de traitement (12) est configuré pour :
recevoir en continu les données du jeu en temps réel à partir du dispositif de jeu (2) ;
et
traiter les données de jeu dans un format prédéterminé, et dans lequel
le dispositif de génération (13) est configuré pour :
acquérir les données de jeu traitées à partir de l'appareil de traitement (12) ; et
générer un contenu de commentaire à composer avec la vidéo de jeu en utilisant les données de jeu traitées en réponse à une opération saisie par le commentateur, et
associer le contenu du commentaire avec la vidéo de jeu émise en continu par le dispositif de jeu (2) à une position synchronisée avec la coordonnée de position, la vidéo composée produite par le dispositif de génération (13) étant affichée par le dispositif d'affichage (19).

2. Système de génération vidéo selon la revendication 1, comprenant en outre un dispositif d'exploitation configuré pour faire fonctionner le dispositif de génération (13).

3. Système de génération vidéo selon l'une quelconque des revendications 1 ou 2, dans lequel le dispositif de traitement (12) est configuré pour fournir des données de jeu au dispositif de génération (13) en réponse à la réception d'une demande du dispositif de génération (13).

4. Système de génération vidéo selon l'une quelconque des revendications 1 à 3, comprenant en outre un dispositif configuré pour acquérir des informations biologiques sur un joueur qui joue au jeu, dans lequel le dispositif de génération (13) est configuré pour générer un contenu de commentaire à partir des informations biologiques acquises.
